# EUROPEAN PATENT APPLICATION

(11) **EP 4 769 881 A1**
(43) Date of publication of application: **01.07.2026**
(21) Application number: 25774670.1
(22) Date of filing: 21.03.2025
(51) Int. Cl.: H02J 7/00, H02J 3/32

(54) **ENERGY STORAGE SYSTEM, OPERATING METHOD THEREOF, AND CHARGING SYSTEM INCLUDING ENERGY STORAGE SYSTEM**

(30) Priority: 21.03.2024 KR 20240039346; 20.03.2025 KR 20250035752
(71) Applicant: LG ENERGY SOLUTION, LTD., Seoul 07335 (KR)
(72) Inventor: LEE, Joon Seok, Yuseong-gu, Daejeon 34122 (KR); KIM, Dong Myung, Yuseong-gu, Daejeon 34122 (KR); AN, Jin Hong, Yuseong-gu, Daejeon 34122 (KR); PARK, Sung Hee, Yuseong-gu, Daejeon 34122 (KR); MOON, Hui Yeong, Yuseong-gu, Daejeon 34122 (KR); KWON, Seong Hyun, Yuseong-gu, Daejeon 34122 (KR)
(74) Representative: BCKIP Part mbB
(86) International application number: PCT/KR2025/003639
(87) International publication number: WO 2025/198359

(57) **Abstract**

An energy storage system according to an embodiment disclosed herein may include an interface configured to receive charging information about a battery and an electric power supply request from a plurality of charging devices and a controller configured to control electric power supply to a target battery connected to a target charging device based on an electric power supply request received from the target charging device among the plurality of charging devices and perform processing for redistributing electric power to be supplied to the target battery to batteries connected to respective ones of one or more other charging devices other than the target charging device among the plurality of charging devices, based on charging information about the target battery connected to the target charging device.

## Description

### TECHNICAL FIELD

### Cross-reference to Related Applications

This application claims priority from Korean Patent Application Nos. 10-2024-0039346, filed on March 21, 2024, and 10-2025-0035752, filed on March 20, 2025, the disclosures of which are incorporated by reference herein.

### Technical Field

Embodiments disclosed herein relate to an energy storage system, an operating method thereof, and a charging system including the energy storage system.

### BACKGROUND ART

An energy storage system (ESS) is a device that stores generated electricity in a storage unit such as a battery and supplies the electricity when needed to improve the efficiency of power usage. The energy storage system (ESS) may store electricity generated from renewable energy sources such as sunlight, wind power, or the like or electricity transmitted from power plants in batteries, allowing the electricity to be stored at night when power consumption is low and used during the day when power consumption is high.

In addition, in order to charge a battery, the battery may be connected to the energy storage system or connected to a slow charging device or a fast charging device. In this case, in environments equipped only with slow charging devices, the demand for fast charging may not be met, which is a limitation.

### DISCLOSURE OF THE INVENTION

### TECHNICAL PROBLEM

The embodiments disclosed herein are directed to providing an energy storage system capable of supporting fast charging of a charging device, an operating method therefor, and a charging system including the energy storage system.

The embodiments disclosed herein are also directed to providing an energy storage system capable of supplying additional electric power to charging devices, an operating method therefor, and a charging system including the energy storage system.

The embodiments disclosed herein are also directed to providing an energy storage system capable of improving the charging efficiency of a charging device by being integrated into the charging device and an operating method therefor.

The embodiments disclosed herein are also directed to providing a charging system capable of improving the charging efficiency of a charging device by integrally managing the charging device and an energy storage system.

The technical problems of the embodiments disclosed herein are not limited to those mentioned above, and other objectives not mentioned will be clearly understood by those skilled in the art from the following descriptions.

### TECHNICAL SOLUTION

According to an embodiment disclosed herein, there is provided an energy storage system including an interface configured to receive charging information about a battery and an electric power supply request from a plurality of charging devices and a controller configured to control electric power supply to a target battery connected to a target charging device based on an electric power supply request received from the target charging device among the plurality of charging devices and perform processing for redistributing electric power to be supplied to the target battery to batteries connected to respective ones of one or more other charging devices other than the target charging device among the plurality of charging devices, based on charging information about the target battery connected to the target charging device.

According to an embodiment, the controller may perform processing for redistributing electric power to the batteries connected to the respective ones of the one or more other charging devices when a state of charge (SOC) of the target battery reaches a preset reference SOC.

According to an embodiment, the controller may determine redistribution priorities based on SOCs of the batteries connected to the respective ones of the one or more other charging devices and determine an order of electric power supply to the batteries connected to the respective ones of the one or more other charging devices based on the redistribution priorities.

According to an embodiment, the controller may determine the redistribution priorities to be inversely proportional to a magnitude order of current SOCs of the batteries connected to the respective ones of the one or more other charging devices.

According to an embodiment, the controller may determine the amount of electric power supplied to the target battery connected to the target charging device or batteries connected to the one or more other charging devices based on a charging fee at a time point at which the energy storage system is charged.

According to an embodiment, the controller may determine the amount of electric power supplied to the target battery based on a charge amount of the energy storage system at a time point at which the electric power supply request is received.

According to an embodiment, the interface may further receive charging pattern information about respective batteries connected from the plurality of charging devices.

According to an embodiment, the controller may control electric power supply to the target battery or batteries connected to the one or more other charging devices by considering the charging pattern information.

According to an embodiment, the controller may determine the amount of electric power required to be supplied from the charging pattern information and controls the electric power supply to the target battery or the batteries connected to the one or more other charging devices in response to the amount of electric power required to be supplied.

According to an embodiment disclosed herein, there is provided an operating method for an energy storage system, including receiving charging information about a battery and an electric power supply request from a plurality of charging devices, controlling electric power supply to a target battery connected to a target charging device based on an electric power supply request received from the target charging device among the plurality of charging devices, and performing processing for redistributing electric power to be supplied to the target battery to batteries connected to respective ones of one or more other charging devices other than the target charging device among the plurality of charging devices, based on charging information about the target battery connected to the target charging device.

According to an embodiment, in the performing of the processing, the processing may be performed when an SOC of the target battery reaches a preset reference SOC.

According to an embodiment, the performing of the processing may include determining redistribution priorities based on SOCs of the batteries connected to the respective ones of the one or more other charging devices, and determining an order of electric power supply to the batteries connected to the respective ones of the one or more other charging devices based on the redistribution priorities.

According to an embodiment, the performing of the processing may include determining the redistribution priorities to be inversely proportional to a magnitude order of current SOCs of the batteries connected to the respective ones of the one or more other charging devices.

According to an embodiment, the operating method may further include determining the amount of electric power supplied to the target battery or batteries connected to respective ones of the one or more other charging devices based on a charging fee at a time point at which the energy storage system is charged.

According to an embodiment, the operating method may further include determining the amount of electric power supplied to the target battery based on a charge amount of the energy storage system at a time point at which the electric power supply request is received.

According to an embodiment, the operating method may further include receiving charging pattern information about each charging target battery from the plurality of charging devices, and controlling electric power supply to the target battery or the batteries connected to the respective ones of the one or more other charging devices by considering the charging pattern information.

According to an embodiment disclosed herein, there is provided a charging system including a plurality of charging devices and at least one energy storage system electrically connected to the plurality of charging devices, in which each of the at least one energy storage system includes an interface configured to receive charging information about a battery and an electric power supply request from a plurality of charging devices and a controller configured to control electric power supply to a target battery connected to a target charging device based on an electric power supply request received from the target charging device among the plurality of charging devices and perform processing for redistributing electric power to be supplied to the target battery to batteries connected to respective ones of one or more other charging devices other than the target charging device among the plurality of charging devices, based on charging information about the target battery connected to the target charging device.

### ADVANTAGEOUS EFFECTS

An energy storage system, an operating method therefor, and a charging system including the energy storage system according to an embodiment disclosed herein can support fast charging of a charging device.

An energy storage system, an operating method therefor, and a charging system including the energy storage system according to an embodiment disclosed herein can shorten a charging time by supplying additional electric power to charging devices.

An energy storage system and an operating method therefor according to an embodiment disclosed herein can improve the charging efficiency of a charging device by the energy storage system being integrated into a charging device.

A charging system according to an embodiment disclosed herein can improve the charging efficiency of charging devices by integrally managing the charging devices and an energy storage system.

### BRIEF DESCRIPTION OF THE DRAWINGS

FIG. 1 is a diagram showing a charging system according to an embodiment disclosed herein.
FIG. 2 is a block diagram showing an energy storage system according to an embodiment disclosed herein.
FIG. 3 schematically shows the flow of electric power supply and redistribution by the energy storage system according to an embodiment.
FIGS. 4 and 5 are views for describing operations of an energy storage system according to an embodiment disclosed herein.
FIG. 6 is a flowchart showing an operating method for an energy storage system according to an embodiment disclosed herein.
FIG. 7 is a block diagram showing a charging device according to an embodiment disclosed herein.
FIG. 8 is a block diagram showing a charging system according to another embodiment disclosed herein.
FIG. 9 is a view for describing operations of an energy storage system according to the other embodiment disclosed herein.

### MODE FOR CARRYING OUT THE INVENTION

Hereinafter, various embodiments disclosed herein will be described in detail with reference to the attached drawings. In the present disclosure, the same reference numerals are used for the same elements in the drawings, and duplicate descriptions for the same elements are omitted.

In various embodiments disclosed herein, specific structural or functional descriptions are merely exemplary for the purpose of describing the embodiments, and various embodiments disclosed herein may be implemented in various forms and should not be construed as being limited to the embodiments described herein.

As used in various embodiments, the terms such as "first," "second," "the first," "the second" or the like may modify various components, regardless of order and/or importance, but do not limit the components. For example, without departing from the scope of the embodiments disclosed herein, a first element may be termed a second element, and similarly, in reverse, a second element may be termed a first element.

The terms and phrases as used herein are merely provided to describe specific embodiments, and may not be intended to limit the scope of other embodiments. A singular form may include a plural form, unless the context clearly indicates otherwise.

All terms, including technical or scientific terms, as used here, may have the same meaning as commonly understood by a person skilled in the art to which the embodiments disclosed herein belong. Terms such as those defined in commonly-used dictionaries should be interpreted as having a meaning that is consistent with their meaning in the context of the relevant art and will not be interpreted in an idealized or overly formal sense unless expressly so defined here. In some cases, even terms defined here cannot be interpreted to exclude embodiments disclosed herein.

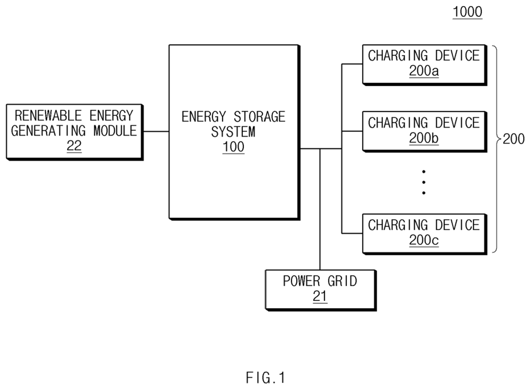

FIG. 1 is a diagram showing a charging system according to an embodiment disclosed herein.

Referring to FIG. 1, a charging system 1000 may include an energy storage system (ESS) 100 and a plurality of charging devices 200. Here, the charging device 200 may include a charger for charging a battery included in a mobile device including an electric vehicle (EV), an electric scooter, an urban air mobility (UAM), or the like, using electric power supplied from a power grid 21 or the like, and in the following description, for ease of understanding, the charging device 200 will be described on the assumption that it is a slow charger.

The energy storage system 100 may be electrically connected to the power grid 21 and/or a renewable energy generating module 22 to receive electric power. That is, the energy storage system 100 may refer to a system that stores electric power supplied from the outside in a battery and then supplies it to the outside when needed. According to various embodiments, the energy storage system 100 may be configured to store surplus electric power during late-night hours and supply it during peak hours to solve power supply and demand problems, and the cost required for charging may vary depending on a point in time at which the energy storage system 100 is charged. Accordingly, the electric power stored in the energy storage system 100 may be used at a lower cost than the electric power supplied to the charging device 200 from the power grid 21 depending on the point in time at which the energy storage system 100 is charged.

The energy storage system 100 may supply stored electric power to a plurality of charging devices 200 and/or charging lines of a plurality of charging devices 200. For example, the energy storage system 100 may supply electric power to a target charging device 200a among the plurality of charging devices 200 and/or a charging line of the target charging device 200a in response to an electric power supply request from the plurality of charging devices 200 and/or users using the plurality of charging devices 200. Here, the charging line may be understood to include a power transmission cable connecting between the charging device 200 and a charging target device (e.g., an electric vehicle (EV)) to supply electric power to the charging target device when charging the charging target device. Accordingly, the electric power stored in the energy storage system 100 may be supplied directly or indirectly to the target battery connected to the target charging device 200a.

To this end, the energy storage system 100 may be equipped with an electric power supply interface (that is, a charging interface), and the charging interface of the energy storage system 100 and the charging interface of the target charging device 200a may be electrically coupled (e.g., coupled through an electric socket) so that a form in which electric power is supplied to the charging target device through a single charging line may be implemented.

The energy storage system 100 may be electrically connected to a plurality of charging devices 200 via communication lines and/or power transmission lines. According to various embodiments, when a request is input from a user (e.g., a fast charging request), the plurality of charging devices 200 may send the electric power supply request to the energy storage system 100. In this way, the target charging device 200a may rapidly charge a battery of the charging target device (e.g., the EV) using electric power stored in the energy storage system 100.

According to an embodiment, the energy storage system 100 may receive charging information about a battery from the plurality of charging devices 200. Here, the battery may refer to a battery that is electrically connected to and charged by each of a plurality of charging devices 200. In addition, the charging information about the battery may include a battery's state of charge (SOC), a battery's degradation level, a size of a charge current, a C-rate related to the charge speed, and the like, but is not limited thereto.

The energy storage system 100 may perform processing for redistributing electric power supplied to the target battery connected to the target charging device 200a based on charging information about a battery received from each of the plurality of charging devices 200. For example, the energy storage system 100 may redistribute electric power originally supplied to the target battery connected to the target charging device 200a to be supplied to batteries connected to respective ones of one or more other charging devices 200b and 200c. Here, redistributing electric power may mean controlling all or part of the electric power originally supplied from the energy storage system 100 to the target battery connected to the target charging device 200a to be supplied to the batteries connected to the respective ones of the one or more other charging devices 200b and 200c.

According to various embodiments, when the SOC of the target battery connected to the target charging device 200a reaches a reference SOC based on the SOC of the battery included in battery charging information, the energy storage system 100 may stop supplying electric power to the target battery and supply electric power to the batteries connected to the respective ones of the one or more other charging devices 200b and 200c. Here, the reference SOC may be set by considering an upper limit of the SOC at which battery degradation is not accelerated during fast charging, and may be set to, for example, a value of SOC 80%, but is not limited thereto.

Therefore, the energy storage system 100 may efficiently supply stored electric power to the batteries connected to respective ones of the plurality of charging devices 200, and the batteries connected to the respective ones of the plurality of charging devices 200 may be rapidly charged by additionally using electric power supplied from the energy storage system 100 in addition to electric power supplied from the charging device 200, so that user convenience may be further improved. This will be described in more detail below.

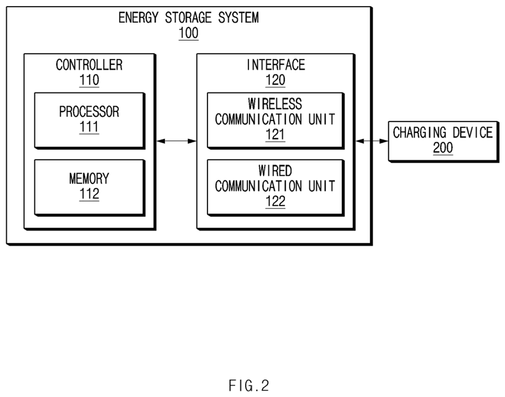

FIG. 2 is a block diagram showing the energy storage system according to an embodiment disclosed herein.

Referring to FIG. 2, the energy storage system 100 according to an embodiment may include a controller 110 including at least one processor 111 and a memory 112, and an interface 120.

The processor 111 may control the overall operation of the energy storage system 100 by outputting a control signal. The processor 111 may include one or more central processing units (CPUs) and graphics processing units (GPUs). In this case, the processor 111 may be implemented as an array of a plurality of logic gates, or may be implemented as a combination of the general-purpose microprocessor 111 and the memory 112 storing a program that may be executed in the microprocessor 111.

The memory 112 may store various types of information necessary for the operation of the energy storage system 100. Specifically, the memory 112 may store an operating system and a program required for the operation of the energy storage system 100, or store data required for driving of the energy storage system 100. For example, the memory 112 may store various programs related to the power generation amount of the renewable energy generating module 22. In addition, the memory 112 may store various battery data such as voltage, current, temperature, and characteristic value data of each battery cell.

According to various embodiments, the memory 112 may include a volatile memory such as a static random-access memory (S-RAM) or a dynamic random-access memory (D-RAM) for temporarily storing data. In addition, the memory 112 may include a non-volatile memory such as a read only memory (ROM), an erasable programmable read only memory (EPROM), or an electrically erasable programmable read only memory (EEPROM) for long-term storage of data.

The processor 111 and the memory 112 may be included in the controller 110, and the controller 110 may control the operation of the energy storage system 100 by controlling the aforementioned components.

According to an embodiment, the controller 110 may receive charging information about a battery and an electric power supply request from a plurality of charging devices 200 (see FIG. 1). Here, the charging devices 200 may include a slow charging device, and the battery may refer to a battery that is connected to the slow charging device to be charged. According to an embodiment, the slow charging device may be contrasted with the fast charging device, and may be distinguished by the amount of electric power that the slow charging device supplies to the battery and/or the speed at which the slow charging device supplies electric power, and may be defined differently by country or region, technology used, manufacturer, or the like. In addition, the charging information about the battery may include a battery's state of charge (SOC), a battery's degradation level, a size of a charge current, a C-rate related to the charge speed, and the like, but is not limited thereto.

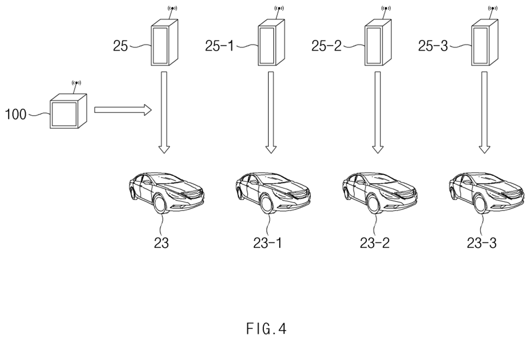

The controller 110 may control the electric power supply to the target battery connected to the target charging device 200a in response to the electric power supply request received from the target charging device 200a (see FIG. 1) among the plurality of charging devices 200. To this end, the energy storage system 100 may be equipped with an electric power supply interface, and the charging interface of the energy storage system 100 and the charging interface of the target charging device 200a may be electrically coupled so that a form in which electric power is supplied to the target battery through a single charging line may be implemented. The target battery may be rapidly charged using additional electric power supplied. For example, the target charging device 200a may refer to a charging device into which a fast charging request has been input by a user, but is not limited thereto. This will be described in more detail with reference to FIG. 4 below.

The controller 110 may control the electric power supply to the target battery based on charging information about the target battery received from the target charging device 200a. According to an embodiment, the controller 110 may reduce the amount of electric power supplied to the target battery or the supply speed of electric power when the degradation level of the target battery connected to the target charging device 200a is at a threshold degradation level or lower. This is to prevent accelerated degradation of the target battery as the target battery is rapidly charged. Here, the threshold degradation level may be set by considering a general degradation degree according to a usage period of the battery.

The controller 110 may perform processing for redistributing electric power supplied to the target battery connected to the target charging device 200a to batteries connected to respective ones of one or more other charging devices 200b and 200c based on the charging information about the battery received from the plurality of charging devices 200. For ease of understanding, it is assumed that the energy storage system 100 also receives an electric power supply request from the one or more other charging devices 200b and 200c.

According to an embodiment, the controller 110 may redistribute electric power supplied to the target battery to batteries connected to respective ones of one or more other charging devices 200b and 200c other than the target charging device 200a based on the SOC of the target battery connected to the target charging device 200a reaching a preset reference SOC. Here, the reference SOC may be set by considering an upper limit of the SOC at which battery degradation is not accelerated during fast charging, and may be set to, for example, a value of SOC 80%, but is not limited thereto.

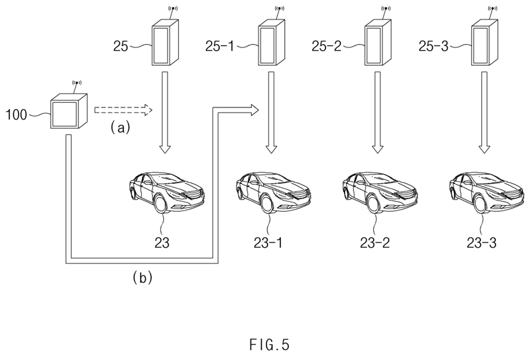

That is, when the SOC of the target battery connected to the target charging device 200a is charged to a certain level or higher, the controller 110 may redistribute the electric power supply to increase the charging speed of the batteries connected to other charging devices 200b and 200c. This allows overcoming a limitation where the electric power supplied from the energy storage system 100 is concentrated on certain users, restricting the charging speed of other users' batteries. This will be described in more detail with reference to FIG. 5 below.

In addition, the controller 110 may determine a redistribution priority for redistribution of electric power based on charging information about each of the batteries connected to the plurality of charging devices 200 and redistribute electric power based on the redistribution priority. Here, the redistribution priority may be determined to be inversely proportional to a current SOC size of the batteries connected to the respective ones of the plurality of charging devices 200. For example, the controller 110 may set a higher redistribution priority for a battery having a lower current SOC among the batteries connected to the respective ones of the plurality of charging devices 200. This is to prevent over-discharge of the battery and maximize the efficiency of fast charging. Accordingly, the controller 110 may preferentially redistribute and supply electric power to a battery having the lowest current SOC among those connected to the plurality of charging devices 200.

The controller 110 may control the electric power supply to the batteries connected to the respective ones of the plurality of charging devices 200 by considering a charging pattern in which the energy storage system 100 is charged. To this end, the controller 110 may cumulatively manage time intervals corresponding to the charging, discharging, and idle states of the energy storage system 100, and information related to such a charging pattern may be stored in the memory 112. According to an embodiment, when the electric power supply request is received from the target charging device 200a, the controller 110 may increase the amount and/or supply speed of electric power supplied to the target charging device 200a when a charging start time point is imminent according to the charging pattern of the energy storage system 100.

The controller 110 may determine the amount of electric power supplied to the batteries connected to the respective ones of the plurality of charging devices 200 based on a charging fee at a time point at which the energy storage system 100 is charged. Here, the amount of electric power may be defined based on various physical quantities such as charge amount, electric power amount, electric charge amount, or the like.

The controller 110 may determine the amount of electric power supplied to the target battery connected to the target charging device 200a by considering at least one of the charge amount of the energy storage system 100 at a time point at which the electric power supply request is transmitted from the plurality of charging devices 200 and the charging pattern for charging the battery. For example, when the current charge amount of the energy storage system 100 is greater than or equal to a reference charge amount, the controller 110 may supply electric power to the target battery in an amount corresponding to a difference between the current charge amount and the reference charge amount. In addition, for example, the controller 110 may reduce the amount of electric power supplied to the target battery when the current charge amount of the energy storage system 100 is less than the reference charge amount. Furthermore, by additionally considering the charging pattern of the energy storage system 100, the controller 110 may increase the amount and/or supply speed of electric power supplied to the target charging device 200a again when the charging start time point of the energy storage system 100 is imminent.

Here, the reference charge amount may be set by considering the degradation degree of the energy storage system 100, the charge cycle, and the like. For example, the shorter the charging cycle in which the energy storage system 100 is charged, the lower the reference charge amount may be set, and the lower the degradation degree of the energy storage system 100, the lower the reference charge amount may be set. This is to prevent over-discharge of the energy storage system 100 and to enable stable operation of the energy storage system 100.

The controller 110 may control the electric power supply to the target battery connected to the target charging device 200a or the batteries connected to the respective ones of the one or more other charging devices 200b and 200c based on charging pattern information about the batteries received from each of the plurality of charging devices 200. Here, the charging pattern information may include fast charging section information (e.g., this may include ranges from 20% to 80% SOC), charging cycles, and the like.

For example, when the current SOC according to the charging information about the target battery received from the target charging device 200a is not included in the fast charging section according to charging pattern information about the target battery, the controller 110 may cut off the electric power supply to the target battery. In this case, the controller 110 may send an electric power supply unavailable message (e.g., recommendation for slow charging) to the target charging device 200.

In addition, for example, when considering the charging cycle of the battery received from each of the plurality of charging devices 200, the controller 110 may preferentially redistribute and supply the electric power to a battery having the smallest difference in charging time.

According to an embodiment, the controller 110 may determine the amount of electric power required to be supplied from charging pattern information about the batteries received from each of the plurality of charging devices 200. For example, when the current SOC (e.g., SOC 60%) of the target battery received from the target charging device 200a is included in fast charging section information (e.g., a section from SOC 20% to 80%) in the charging pattern information about the target battery, the controller 110 may determine a difference (e.g., SOC 20%) between an upper end (e.g., 80%) of the fast charging section and the current SOC as the amount of electric power required to be supplied.

The interface 120 may communicate with the plurality of charging devices 200. The interface 120 may receive the charging information about the batteries, the electric power supply requests, and/or the charging pattern information about the batteries from the plurality of charging devices 200. The interface 120 may include a wireless communication unit 121 and a wired communication unit 122 for communicating with the charging devices 200.

The wireless communication unit 121 may include at least one of a short-range communication module and a long-range communication module.

The short-range communication module may communicate with a charging device 200 adjacent to the energy storage system 100 using a short-range communication method. Here, the short-range communication module may utilize one of the following communication methods: Bluetooth, Bluetooth low energy, infrared data association (IrDA), Zigbee, Wi-Fi, Wi-Fi direct, Ultra Wideband (UWB), or near field communication (NFC).

The long-range communication module may include a communication module that performs various types of long-range communications and may include a mobile communication module. The mobile communication module may transmit and receive wireless signals with at least one of a base station, an external terminal, or the external charging device 200 on a mobile communication network. In addition, the long-range communication module may communicate with the charging device 200, or another electronic device serving as the charging device 200, or the like through a nearby access point (AP). The access point (AP) may connect a local area network (LAN) to which the energy storage system 100 is connected to a wide area network (WAN) to which a communication server is connected. Accordingly, the energy storage system 100 and the charging device 200 may be connected to the communication server through the WAN and communicate with each other.

The wired communication unit 122 may connect to a wired communication network and communicate with the charging device 200 through the wired communication network. For example, the wired communication unit 122 may connect to the wired communication network via Ethernet (IEEE 802.3 technology standard), or connect to the wired communication network via can communication, and may transmit and receive data with the charging devices 200 via the wired communication network.

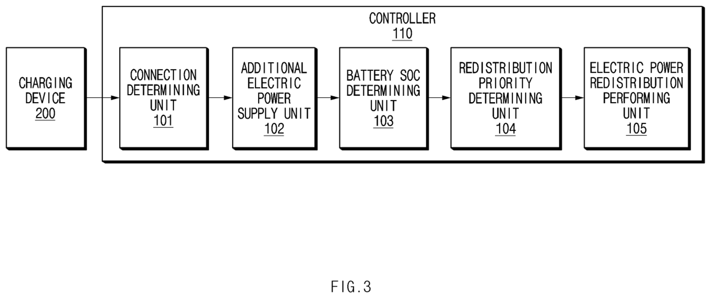

FIG. 3 schematically shows the flow of electric power supply and redistribution by the energy storage system according to an embodiment.

Referring to FIG. 3, the controller 110 may receive an electric power supply request from the charging device 200. In this case, the charging device 200 may refer to a slow charging device or a fast charging device, and may also include a user terminal through which a user may directly input the electric power supply request to increase the charging speed.

According to an embodiment, when the charging device 200 includes a user terminal, the user may connect to the user terminal and directly transmit the electric power supply request to the energy storage system 100, and the user may utilize an interface provided in the user terminal to set a desired charging speed (e.g., the electric power supply amount, supply speed, and the like) or a charging end time.

A connection determining unit 101 of the controller 110 may determine whether the target charging device 200a and the energy storage system 100 are connected, and as a method for determining whether the connection is made by the controller 110, a method for determining whether the charging interface of the energy storage system 100 and the charging interface of the target charging device 200a are coupled to a separately provided connecting member may be considered.

When it is determined that the target charging device 200a and the energy storage system 100 are connected, an additional electric power supply unit 102 of the controller 110 may perform control such that electric power is supplied to the target battery connected to the target charging device 200a from the energy storage system 100 to correspond to the charging speed (e.g., the electric power supply amount, supply speed, and the like) and the charging end time that are requested by the user.

A battery SOC determining unit 103 of the controller 110 may determine the current SOC of the target battery that is connected to the target charging device 200a for charging, and may determine whether the current SOC reaches a preset reference SOC.

The controller 110 may determine the priority for redistributing electric power supplied to the target battery connected to the target charging device 200a when it is determined that the current SOC of the battery reaches the preset reference SOC.

In this case, a redistribution priority determining unit 104 of the controller 110 may determine to which battery, among batteries connected to respective ones of the one or more other charging devices 200b and 200c other than the target charging device 200a, the electric power is to be redistributed and supplied when the SOC of the target battery being charged in the target charging device 200a reaches a certain level or higher.

According to an embodiment, the controller 110 may determine redistribution priorities for the batteries connected to the respective ones of the charging devices 200b and 200c other than the target charging device 200a such that a battery of a lower SOC level assigned a higher priority, and an electric power redistribution performing unit 105 of the controller 110 may redistribute and supply electric power to the batteries connected to the respective ones of the charging devices 200b and 200c according to the determined redistribution priority.

FIGS. 4 and 5 are views for describing operations of an energy storage system according to an embodiment disclosed herein.

First, referring to FIG. 4, a plurality of electric vehicles 23, 23-1, 23-2, and 23-3 may be connected to a plurality of charging devices 25, 25-1, 25-2, and 25-3, respectively, and charging may be performed. Here, the plurality of charging devices 25, 25-1, 25-2, and 25-3 may include the charging devices 200 described with reference to FIGS. 1 to 3. The plurality of charging devices 25, 25-1, 25-2, and 25-3 may receive charging information about batteries connected to the plurality of electric vehicles 23, 23-1, 23-2, and 23-3, respectively.

To this end, the plurality of vehicles 23, 23-1, 23-2, and 23-3 may communicate with the plurality of charging devices 25, 25-1, 25-2, and 25-3, and the plurality of vehicles 23, 23-1, 23-2, and 23-3 and the plurality of charging devices 25, 25-1, 25-2, and 25-3 may each communicate with a user terminal.

In this case, an electric power supply request (or a command to increase the charging speed, a request to shorten the charging time) may be received from some or all of the plurality of charging devices 25, 25-1, 25-2, and 25-3.

When the electric power supply request is received from at least one of the plurality of vehicles 23, 23-1, 23-2, and 23-3, the plurality of charging devices 25, 25-1, 25-2, and 25-3, or the user terminal, the controller 110 may supply electric power to a target charging device 25 and/or a battery of a target vehicle 23 connected to the target charging device (e.g., 25) through a charging line of the target charging device 25.

For example, when the electric power supply request is received from the target charging device 25 connected to the target vehicle 23 as shown in FIG. 4, the controller 110 may control the electric power stored in the energy storage system 100 to be supplied to the battery of the target vehicle 23. In this case, the battery of the target vehicle 23 may be charged by additionally using the electric power supplied from the energy storage system 100 in addition to the electric power supplied from the target charging device 25 (e.g., the electric power supplied from the power grid 21), and thus fast charging may be performed.

For example, assuming that the plurality of charging devices 25, 25-1, 25-2, and 25-3 may supply 50 kW of electric power to the plurality of vehicles 23, 23-1, 23-2, and 23-3, respectively, the controller 110 may additionally supply 50 kW based on the electric power stored in the energy storage system 100, and accordingly, the battery of the target vehicle 23 may be charged at twice the speed using 100 kW of electric power.

In this case, there is no limitation on the method by which the controller 110 supplies the electric power stored in the energy storage system 100 to the battery of the target vehicle 23, and for example, a method may be utilized in which a charging interface of the target charging device 25 and a charging interface of the energy storage system 100 are connected to an input portion of a connecting member (e.g., an electric socket) and the battery of the target vehicle 23 is connected to an output portion of the connecting member.

First, referring to FIG. 5, the plurality of electric vehicles 23, 23-1, 23-2, and 23-3 may be connected to the plurality of charging devices 25, 25-1, 25-2, and 25-3, respectively, and charging may be performed. Here, the plurality of charging devices 25, 25-1, 25-2, and 25-3 may include the charging devices 200 described with reference to FIGS. 1 to 3. The plurality of charging devices 25, 25-1, 25-2, and 25-3 may receive charging information about batteries connected to the plurality of electric vehicles 23, 23-1, 23-2, and 23-3, respectively.

To this end, the plurality of vehicles 23, 23-1, 23-2, and 23-3 may communicate with the plurality of charging devices 25, 25-1, 25-2, and 25-3, and the plurality of vehicles 23, 23-1, 23-2, and 23-3 and the plurality of charging devices 25, 25-1, 25-2, and 25-3 may each communicate with a user terminal.

When the electric power supply request is received from the target charging device 25, the controller 110 may supply the electric power stored in the energy storage system 100 to the target charging device 25 and/or a battery of a first target vehicle 23 connected to the target charging device 25 through the charging line of the target charging device 25, as indicated by arrow (a).

Then, when it is determined that the battery of the first target vehicle 23 reaches a preset reference SOC, the controller 110 may redistribute the electric power of the energy storage system 100 to a battery of a second target vehicle 23-1 connected to another charging device 25-1.

That is, when it is determined that the battery of the first target vehicle 23 reaches the reference SOC, the controller 110 may redistribute the electric power of the energy storage system 100 to the battery of the second target vehicle 23-1 connected to the other charging device 25-1 according to redistribution priorities, as indicated by arrow (b). Here, the redistribution priorities may increase in reverse order of current SOCs of the batteries of the target vehicles 23-1, 23-2, and 23-3 connected to other charging devices 25-1, 25-2, and 25-3 from which the electric power supply request is received, respectively. For example, the increase in the priorities may indicate that the battery having a higher priority preferentially receives electric power from the energy storage system 100.

For example, when the battery SOC of the second target vehicle 23-1 connected to the charging device 25-1 requesting electric power supply is 20% and the battery SOC of the third target vehicle 23-2 connected to a charging device 25-2 is 50%, the controller 110 may control the electric power supply so that the electric power of the energy storage system 100 is preferentially supplied to the second target vehicle 23-1.

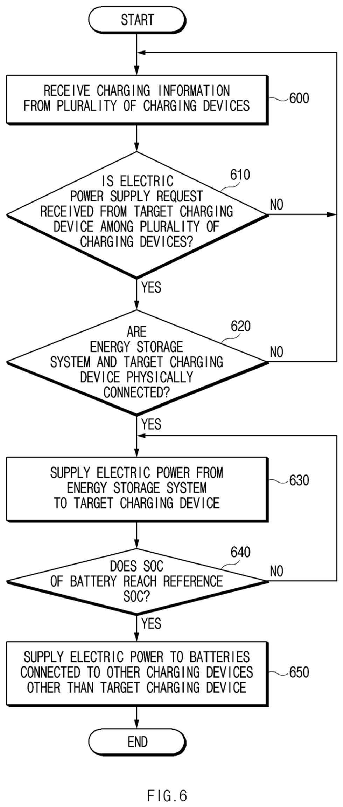

FIG. 6 shows a flowchart of an operating method for an energy storage system according to an embodiment disclosed herein.

Referring to FIG. 6, the controller 110 may receive charging information from the plurality of charging devices 200 through the interface 120 (600). In this case, the controller 110 may receive the charging information directly from the plurality of charging devices 200 or may receive the charging information through a user terminal.

The controller 110 may determine whether an electric power supply request is received from the target charging device 200a among the plurality of charging devices 200 (610), and when the electric power supply request is received from the target charging device 200a among the plurality of charging devices 200 ("Yes" in 610), the controller 110 may determine whether the energy storage system 100 and the target charging device 200a are physically connected (620).

Then, when it is determined that the energy storage system 100 and the target charging device 200a are physically connected with a connecting member (e.g., an electrical socket), the controller 110 may supply electric power from the energy storage system 100 to the target charging device 200a (630).

The controller 110 may communicate with the target charging device 200a to determine whether the SOC of the target battery connected to the target charging device 200a reaches a reference SOC (640), and when it is determined that the SOC of the target battery reaches the reference SOC ("Yes" in 640), the controller 110 may redistribute the electric power supply to batteries connected to respective ones of one or more other charging devices 200b and 200c other than the target charging device 200a based on redistribution priorities (650).

As described above, the energy storage system 100 according to an embodiment disclosed herein may increase the charging speed of the battery and reduce the time taken to complete charging according to a user's request, thereby providing the effect of enabling efficient and user-friendly charging schedule management.

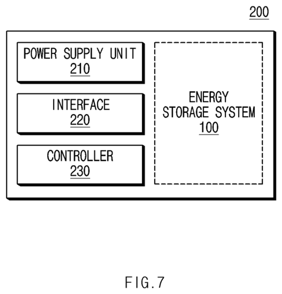

FIG. 7 is a block diagram showing a charging device according to an embodiment disclosed herein.

Referring to FIG. 7, the charging device 200 may include a power supply unit 210, an interface 220, and a controller 230.

The power supply unit 210 may receive electric power from the power grid 21 (see FIG. 1). According to various embodiments, the power supply unit 210 may include a converter for converting AC power supplied from the power grid 21 into DC power.

The interface 220 may acquire charging information and/or charging pattern level about a battery from the battery connected for charging.

The interface 220 may communicate with the energy storage system 100 (see FIG. 1). For example, the interface 220 may send, to the energy storage system 100, the charging information and/or charging pattern information about the battery connected for charging. In addition, the interface 220 may send, to the energy storage system 100, an electric power supply request (e.g., a fast charging request) input from a user.

In addition, the interface 220 may include a user interface. For example, the interface 220 may include an input portion and an output portion. According to various embodiments, the input portion may be implemented as at least one among input means such as a touch screen, a push button, a membrane button, a dial, and a slider switch, or the like, but is not limited thereto. In addition, the output portion may be implemented as a display means such as a plasma display panel (PDP), a liquid crystal display (LCD) panel, a light emitting diode (LED) panel, an organic light emitting diode (OLED) panel, an active-matrix organic light-emitting diode (AMOLED) panel, a curved display panel, or the like, but is not limited thereto.

The controller 230 may control the overall operation of the charging device 200. For example, the controller 230 may supply electric power to the connected battery in response to a slow charging request input from the user. For example, the controller 230 may supply electric power stored in the power supply unit 210 to the battery.

The controller 230 may control electric power supply to the battery based on the charging information and/or charging pattern level about the battery.

The controller 230 may control electric power from the energy storage system 100 to be additionally supplied to the battery in response to the electric power supply request (e.g., the fast charging request) input from the user. For example, the controller 230 may charge the battery connected to the charging device 200 using both electric power from the power supply unit 210 and electric power sent from the energy storage system 100.

According to various embodiments, the charging device 200 may include the energy storage system 100 described with reference to FIGS. 1 to 3. In this case, the controller 230 may provide a normal charging (e.g., slow charging) or fast charging function according to the request input from the user. For example, when a fast charging request is input from the user, the controller 230 may charge the battery connected to the charging device 200 using both the electric power of the power supply unit 210 and the electric power of the energy storage system 100.

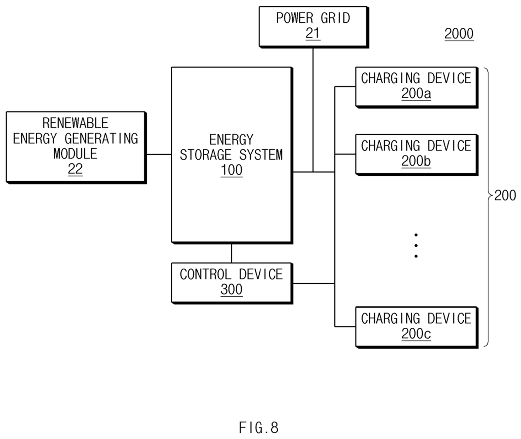

FIG. 8 is a block diagram showing a charging system according to another embodiment disclosed herein.

Referring to FIG. 8, a charging system 2000 according to another embodiment disclosed herein may further include a control device 300 compared to the charging system 1000 described with reference to FIG. 1. In order to avoid the repeated description, specific descriptions of the energy storage system 100, the plurality of charging devices 200, the power grid 21, and the renewable energy generating module 22 having the same configurations as described with reference to FIG. 1 may be omitted.

The control device 300 may manage the operation of the energy storage system 100 and the plurality of charging devices 200. For example, the control device 300 may manage electric power supply (or electric power transmission and reception) between the energy storage system 100 and the plurality of charging devices 200. According to various embodiments, the control device 300 may be implemented in the form of a server or a cloud.

According to an embodiment, the control device 300 may receive an electric power supply request from at least one target charging device 200a among the plurality of charging devices 200. In this case, the control device 300 may send the electric power supply request to the energy storage system 100 to perform control so that the electric power stored in the energy storage system 100 may be supplied to a battery connected to the target charging device 200a.

In addition, when the electric power supply request is received from the at least one target charging device 200a, the control device 300 may send the electric power supply request to other charging devices (e.g., 200b and 200c). The other charging devices (e.g., 200b and 200c) that have received the electric power supply request may supply the electric power to the target charging device 200a and/or a charging line of the target charging device 200a, so that the control to supply the electric power to the target battery connected to the target charging device 200a may be performed. To this end, charging interfaces of the other charging devices (e.g., 200b and 200c) and a charging interface of the target charging device 200a may be electrically coupled (e.g., coupled via an electrical socket), so that a configuration may be implemented in which electric power is supplied to the target battery through a single charging line.

According to various embodiments, the control device 300 may perform processing for redistributing electric power supplied to the target battery connected to the target charging device 200a based on charging information about a battery received from each of the plurality of charging devices 200. For example, the control device 300 may redistribute electric power originally supplied to the target battery connected to the target charging device 200a to be supplied to batteries connected to respective ones of one or more other charging devices 200b and 200c.

According to various embodiments, when the SOC of the target battery connected to the target charging device 200a reaches a reference SOC based on the SOC of the battery included in battery charging information, the control device 300 may stop supplying electric power to the target battery and supply electric power to the batteries connected to the respective ones of the one or more other charging devices 200b and 200c.

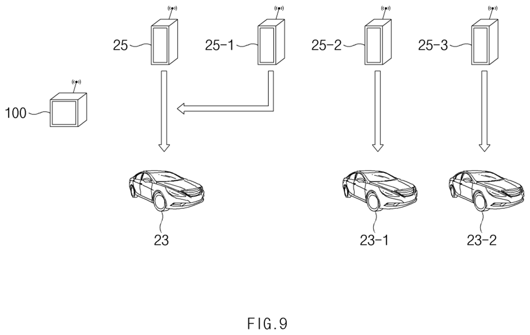

FIG. 9 is a view for describing operations of the energy storage system according to the other embodiment disclosed herein.

Referring to FIG. 9, a plurality of electric vehicles 23, 23-1, 23-2, and 23-3 may be connected to a plurality of charging devices 25, 25-1, 25-2, and 25-3, respectively, and charging may be performed. Here, the plurality of charging devices 25, 25-1, 25-2, and 25-3 may include the charging devices 200 described with reference to FIGS. 1 to 3. The plurality of charging devices 25, 25-1, 25-2, and 25-3 may receive charging information about batteries connected to the plurality of electric vehicles 23, 23-1, 23-2, and 23-3, respectively.

To this end, the plurality of vehicles 23, 23-1, 23-2, and 23-3 may communicate with the plurality of charging devices 25, 25-1, 25-2, and 25-3, and the plurality of vehicles 23, 23-1, 23-2, and 23-3 and the plurality of charging devices 25, 25-1, 25-2, and 25-3 may each communicate with a user terminal.

When the electric power supply request is received from the target charging device 25, the control device 300 may communicate with another charging device 25-1 and transmit a charging start command to the other charging device 25-1 so that the other charging device 25-1 may supply additional electric power to the battery of the target vehicle 23.

In this case, there is no limitation on the method by which the control device 300 supplies the electric power in the other charging device 25-1 to the battery of the target vehicle 23, and for example, a method may be utilized in which a charging interface of the target charging device 25 and a charging interface of the other charging device 25-1 is connected to an input portion of a connecting member (e.g., an electric socket) and the battery of the target vehicle 23 is connected to an output portion of the connecting member.

Accordingly, for the target vehicle 23 requesting an increase in charging speed, the charging speed may be increased and the time taken to end the charging may be shortened by adding the electric power supplied from the other slow charging device 25-1, which is a slow charging device, to the electric power supplied from the target charging device 25, which is another slow charging device.

Specifically, assuming that the plurality of charging devices 25, 25-1, 25-2, and 25-3 may each supply 50 kW of electric power, the control device 300 may additionally supply 50 kW from another charging device 25-1, and accordingly, the battery of the target vehicle 23 may be charged at twice the speed with 100 kW of electric power.

Meanwhile, the disclosed embodiments may be implemented in the form of a recording medium storing instructions executable by a computer. Instructions may be stored in the form of program codes, and when executed by a processor, may create program modules to perform operations of the disclosed embodiments. The recording medium may be implemented as a computer-readable recording medium.

The computer-readable recording medium includes all types of recording media in which instructions capable of being decoded by a computer are stored. For example, there may be a read only memory (ROM), a random access memory (RAM), a magnetic tape, a magnetic disk, a flash memory, an optical data storage device, and the like.

In addition, the computer-readable recording medium may be provided in the form of a non-transitory storage medium. Here, the "non-transitory storage medium" simply means that the storage medium is a tangible device, and does not include a signal (e.g., an electromagnetic wave), but this term does not differentiate between where data is semi-permanently stored in the storage medium and where the data is temporarily stored in the storage medium. For example, the "'non-transitory storage medium" may include a buffer in which data is temporarily stored.

According to an embodiment, a method according to various embodiments disclosed herein may be included and provided in a computer program product. The computer program product may be traded as a product between a seller and a buyer. The computer program product may be distributed in the form of a machine-readable recording medium (e.g., compact disc read only memory (CD-ROM)), or be distributed (e.g., downloaded or uploaded) online via an application store (e.g., PlayStore^{™}), or between two user devices (e.g., smartphones) directly. When distributed online, at least part of the computer program product (e.g., a downloadable app) may be temporarily generated or at least temporarily stored in the machine-readable recording medium, such as the memory 102 of the manufacturer's server, a server of the application store, or a relay server.

Although all the components constituting the embodiments disclosed herein have been described as being combined or operating in combination as one, the embodiments disclosed herein are not necessarily limited to these embodiments. That is, within the scope of the purpose of the embodiments disclosed herein, all of the components may be selectively combined and operated one or more times.

In addition, terms such as "include," "comprise," or "have" described above mean that the corresponding component can be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

## Claims

1. An energy storage system comprising:
an interface configured to receive charging information about a battery and an electric power supply request from a plurality of charging devices; and
a controller configured to:
control electric power supply to a target battery connected to a target charging device based on an electric power supply request received from the target charging device among the plurality of charging devices; and
perform processing for redistributing electric power to be supplied to the target battery to batteries connected to respective ones of one or more other charging devices other than the target charging device among the plurality of charging devices, based on charging information about the target battery connected to the target charging device.

2. The energy storage system of claim 1, wherein the controller performs processing for redistributing electric power to the batteries connected to the respective ones of the one or more other charging devices when a state of charge (SOC) of the target battery reaches a preset reference SOC.

3. The energy storage system of claim 1, wherein the controller determines redistribution priorities based on SOCs of the batteries connected to the respective ones of the one or more other charging devices, and determines an order of electric power supply to the batteries connected to the respective ones of the one or more other charging devices based on the redistribution priorities.

4. The energy storage system of claim 3, wherein the controller determines the redistribution priorities to be inversely proportional to a magnitude order of current SOCs of the batteries connected to the respective ones of the one or more other charging devices.

5. The energy storage system of claim 1, wherein the controller determines the amount of electric power supplied to the target battery connected to the target charging device or batteries connected to the one or more other charging devices based on a charging fee at a time point at which the energy storage system is charged.

6. The energy storage system of claim 1, wherein the controller determines the amount of electric power supplied to the target battery based on a charge amount of the energy storage system at a time point at which the electric power supply request is received.

7. The energy storage system of claim 1, wherein the interface further receives charging pattern information about respective batteries connected from the plurality of charging devices.

8. The energy storage system of claim 7, wherein the controller controls electric power supply to the target battery or batteries connected to the one or more other charging devices by considering the charging pattern information.

9. The energy storage system of claim 8, wherein the controller determines the amount of electric power required to be supplied from the charging pattern information and controls the electric power supply to the target battery or the batteries connected to the one or more other charging devices in response to the amount of electric power required to be supplied.

10. An operating method for an energy storage system, comprising:
receiving charging information about a battery and an electric power supply request from a plurality of charging devices;
controlling electric power supply to a target battery connected to a target charging device based on an electric power supply request received from the target charging device among the plurality of charging devices; and
performing processing for redistributing electric power to be supplied to the target battery to batteries connected to respective ones of one or more other charging devices other than the target charging device among the plurality of charging devices, based on charging information about the target battery connected to the target charging device.

11. The operating method of claim 10, wherein in the performing of the processing, the processing is performed when an SOC of the target battery reaches a preset reference SOC.

12. The operating method of claim 10, wherein the performing of the processing includes determining redistribution priorities based on SOCs of the batteries connected to the respective ones of the one or more other charging devices, and determining an order of electric power supply to the batteries connected to the respective ones of the one or more other charging devices based on the redistribution priorities.

13. The operating method of claim 12, wherein the performing of the processing includes determining the redistribution priorities to be proportional to a magnitude order of current SOCs of the batteries connected to the respective ones of the one or more other charging devices.

14. The operating method of claim 10, further comprising determining the amount of electric power supplied to the target battery or batteries connected to respective ones of the one or more other charging devices based on a charging fee at a time point at which the energy storage system is charged.

15. The operating method of claim 10, further comprising determining the amount of electric power supplied to the target battery based on a charge amount of the energy storage system at a time point at which the electric power supply request is received.

16. The operating method of claim 10, further comprising receiving charging pattern information about each charging target battery from the plurality of charging devices, and
controlling electric power supply to the target battery or the batteries connected to the respective ones of the one or more other charging devices by considering the charging pattern information.

17. A charging system comprising:
a plurality of charging devices; and
at least one energy storage system electrically connected to the plurality of charging devices,
wherein each of the at least one energy storage system includes:
an interface configured to receive charging information about a battery and an electric power supply request from a plurality of charging devices; and
a controller configured to:
control electric power supply to a target battery connected to a target charging device based on an electric power supply request received from the target charging device among the plurality of charging devices; and
perform processing for redistributing electric power to be supplied to the target battery to batteries connected to respective ones of one or more other charging devices other than the target charging device among the plurality of charging devices, based on charging information about the target battery connected to the target charging device.
